# EUROPÄISCHE PATENTSCHRIFT

(11) **EP 1 491 740 B1**
(45) Veröffentlichungstag und Bekanntmachung des Hinweises auf die Patenterteilung: **27.02.2008**
(21) Anmeldenummer: 03101845.0
(22) Anmeldetag: 24.06.2003
(51) Int. Cl.: F02B 1/12, F02D 21/08, F02D 41/30, F02D 41/40

(54) **Verfahren zum Betrieb eines Dieselmotors**
Method of operating a Diesel engine
Procédé de fonctionnement d'un moteur Diesel

(43) Veröffentlichungstag der Anmeldung: 29.12.2004
(73) Patentinhaber: Ford Global Technologies, LLC, A subsidary of Ford Motor Company, Dearborn, MI 48126 (US)
(72) Erfinder: Karvounis, Evangelos, 52070, Aachen (DE); Roettger, Daniel, 4731, Eynatten (BE); Nitsche, Thomas, 52062, Aachen (DE)
(74) Vertreter: Drömer, Hans-Carsten

(56) Entgegenhaltungen:
- EP-A- 1 085 176
- WO-A-99/42718
- DE-A- 19 953 932
- US-A1- 2002 007 816
- US-A1- 2003 111 041
- YANAGIHARA HIROMICHI ET AL: "A STUDY OF DI DIESEL COMBUSTION UNDER UNIFORM HIGHER-DISPERSED MIXTURE FORMATION" JSAE REVIEW, SOCIETY OF AUTOMOTIVE ENGINEERS OF JAPAN, TOKYO, JP AND ELSEVIER SCIENCE BV (NL), Bd. 18, Nr. 3, Juli 1997 (1997-07), Seiten 247-254, XP000979665 ISSN: 0389-4304
- TSURUSHIMA TADASHI ET AL: "Thermodynamic Characteristics of Premixed Compression Ignition Combustions" SAE TECHNICAL PAPER SERIES 2001-01-1891, SOCIETY OF AUTOMOTOVE ENGINEERS, WARRENDALE, PA, USA - INTERNATIONAL SPRING FUELS & LUBRICANTS MEETING & EXHIBITION, ORLANDO, FLORIDA, 7. - 9. Mai 2001, XP002261384

## Beschreibung

Die Erfindung betrifft ein Verfahren zum Betrieb eines Dieselmotors mit Direkteinspritzung in verschiedenen Betriebsmodi sowie einen zur Durchführung des Verfahrens eingerichteten Dieselmotor.

Bei der Mehrzahl der Kraftfahrzeuge mit einem Dieselmotor mit Direkteinspritzung sind die Motorsteuerung und der Motor so ausgelegt, daß die Gemischbildung und Verbrennung in einem verhältnismäßig engen Winkelbereich um den oberen Totpunkt des Kolbens erfolgt. Der übliche Verbrennungsmodus in einem solchen Dieselmotor ist daher durch eine kurze Phase der Zündverzögerung, gefolgt von einer Verbrennungsphase mit einer Vorvermischung und Diffusion gekennzeichnet. Durch die bevorzugte Entzündung des heterogenen Gemisches in kraftstoffreichen Zonen kommt es dort zu einer erhöhten Rußbildung. Da die Rußbildung mit steigender Abgasrückführungsrate zunimmt, kann Letztere nicht so stark erhöht werden, wie es eigentlich zur Reduzierung von NOx-Emissionen wünschenswert wäre.

Aus der DE 199 53 932 A1 ist ein Verfahren zum Betreiben eines Dieselmotors mit Direkteinspritzung bekannt, bei welchem in verschiedenen Lastbereichen des Motors verschiedene Betriebsmodi ausgeführt werden. Insbesondere kann dabei in einem Bereich kleiner bis mittlerer Lasten eine homogene Kraftstoffverbrennung stattfinden, wobei der Kraftstoff zwischen 180° und 20° vor dem oberen Totpunkt des Kolbens eingespritzt werden soll. Bei höheren Lasten soll die homogene Verbrennung optional durch eine zusätzliche heterogene Verbrennung mit einer Kraftstoffinjektion in der Nähe des oberen Totpunktes ergänzt werden (vgl. Figur 9). Auf die Frage der Schadstoffemissionen wird in der DE 199 53 932 A1 nicht eingegangen.

Aus der Literatur (YANAGIHARA HIROMICHI ET AL: "A STUDY OF DI DIESEL COMBUSTION UNDER UNIFORM HIGHER-DISPERSED MIXTURE FORMATION", JSAE REVIEW, SOCIETY OF AUTOMOTIVE ENGINEERS OF JAPAN, TO-KYO, (JP) AND ELSEVIER SCIENCE BV (NL), Bd. 18, Nr.3, Seiten 247-254 (1997)) sind Experimente zu einem Verbrennungssystem für Dieselmotoren bekannt, die auf vier Kernmerkmalen basieren: einer frühen Kraftstoffinjektion, einer Injektion bei geringem Druck durch große Bohrungen, einer geringen Strahlgeschwindigkeit durch ein Hindernis in der Injektionsdüse, und einer Injektion minimaler Dauer. Für den Bereich geringer Lasten wurden dabei unter anderem für die Abhängigkeit der Emissionen von NOx und Ruß verschiedene nichtlineare Verläufe ermittelt.

Vor diesem Hintergrund war es eine Aufgabe der vorliegenden Erfindung, ein verbessertes Verfahren zum Betrieb eines Dieselmotors mit Direkteinspritzung bereitzustellen, welches insbesondere die Einhaltung strenger Abgasnormen in Bezug auf die NOx- und Rußemissionen ermöglichen soll.

Diese Aufgabe wird durch ein Verfahren mit den Merkmalen des Patentanspruchs 1 sowie durch einen Dieselmotor mit den Merkmalen des Patentanspruchs 9 gelöst. Vorteilhafte Ausgestaltungen sind in den Unteransprüchen enthalten.

Das erfindungsgemäße Verfahren zum Betrieb eines Dieselmotors mit Direkteinspritzung umfaßt (mindestens) die folgenden zwei Betriebsmodi:
A) Erster Betriebsmodus A bei geringer Motorlast: In diesem Betriebsmodus findet eine homogene Verbrennung des gesamten, in einem Motortakt injizierten Kraftstoffes statt, wobei während der Verdichtungsphase eines Zylinders zwischen 180° und 0° vor dem oberen Totpunkt (OT) des Kolbens mindestens eine Kraftstoffinjektion (vorzugsweise ein bis vier Kraftstoffinjektionen) stattfindet, und wobei ferner eine Abgasrückführung (AGR) mit einer Rate zwischen 40% und 75% erfolgt. Vorzugsweise liegt die AGR-Rate zwischen 55% und 65%. Die Prozentangabe bei der Abgasrückführung bezieht sich dabei auf den gesamten in den Zylinder eintretenden Volumenstrom, der sich aus Frischluft und rückgeführtem Abgas zusammensetzt.
B) Zweiter Betriebsmodus B bei mittlerer Motorlast: Im zweiten Betriebsmodus erfolgt zum einen eine homogene Verbrennung von ca. 50% bis ca. 90% (bezogen auf das Gewicht) des während eines Arbeitstaktes injizierten Kraftstoffes, wobei die Bedingungen wie im ersten Betriebsmodus A gewählt sind (d. h. mindestens eine Kraftstoffinjektion während der Verdichtungsphase zwischen 180° und 0° vor dem OT und 40% bis 75% AGR). Darüber hinaus erfolgt eine (in der Regel heterogene) Verbrennung des restlichen Kraftstoffes (d.h. von 50%-10%), welcher zwischen 0° und 40° nach dem oberen Totpunkt injiziert wird.

Wie im Rahmen der Figurenbeschreibung detaillierter erläutert wird, kann mit dem vorgeschlagenen Verfahren eine erhebliche Reduzierung der NOx- und Rußemissionen im Bereich kleiner und mittlerer Motorlasten erreicht werden. Hierdurch wird es möglich, bei guter Kraftstoffausnutzung gleichzeitig die zunehmend strengeren Emissionsvorschriften für Kraftfahrzeuge zu erfüllen.

Die Kraftstoffinjektion während der beiden Betriebsmodi A und B des Verfahrens erfolgt vorzugsweise bei einem Kraftstoffdruck zwischen 300 und 2000 bar.

Gemäß einer bevorzugten Ausführung des Verfahrens wird im zweiten Betriebsmodus B, d. h. bei mittleren Motorlasten, die Zündverzögerung der homogenen Verbrennung so groß eingestellt, daß die Bildung des homogenen Gemisches zumindest teilweise in der Nähe des oberen Totpunktes des Kolbens stattfindet, und daß die maximale Wärmeabgabe aus dieser Verbrennung nach dem oberen Totpunkt des Kolbens erfolgt. Eine derartige Einstellung der Zündverzögerung ist insbesondere durch ein reduziertes Verdichtungsverhältnis (typischerweise zwischen 12 und 16), durch eine Kühlung der rückgeführten Abgase, durch eine wandgeführte Strömung des Gemisches im Zylinder und/oder durch die Formgebung einer Kolbenmulde auf der Oberseite des Kolbens erzeugbar. Die hohe Zündverzögerung ermöglicht es, den Arbeitsbereich mit geringen NOx- und Rußemissionen erheblich auszudehnen. Ferner trägt die hohe Zündverzögerung zu einer Geräuschreduktion sowie einer Minderung des maximalen Zylinderdruckes bei.

Das Verfahren umfaßt ferner optional mindestens einen weiteren Betriebsmodus, welcher vorzugsweise bei hoher Last und/oder bei Volllast des Motors ausgeführt wird. Daneben kann dieser Betriebsmodus jedoch auch bei Bedarf in Bereiche mittlerer und kleinerer Lasten ausgedehnt werden. In dem genannten Betriebsmodus erfolgt eine heterogene Verbrennung des Kraftstoffes, wobei mindestens eine Kraftstoffinjektion in der Nähe des oberen Totpunktes, d. h. insbesondere in einem Bereich von ±20° um den oberen Totpunkt herum, stattfindet. Dieser Betriebsmodus entspricht somit im Wesentlichen dem herkömmlichen Betrieb eines Dieselmotors mit Direkteinspritzung.

Gemäß einer bevorzugten Weiterbildung des Verfahrens wird die für die homogene Verbrennung im Betriebsmodus A und/oder B vorgesehene Kraftstoffmenge in zwei Phasen injiziert, nämlich einer frühen Kraftstoffinjektion und einer späten Kraftstoffinjektion. Die frühe Kraftstoffinjektion findet dabei vorzugsweise zwischen ca. 120° bis 60° vor dem oberen Totpunkt und die späte Kraftstoffinjektion vorzugsweise zwischen ca. 25° und 0° vor dem oberen Totpunkt statt. Wie im Rahmen der Figurenbeschreibung näher erläutert wird, stellt der Zeitpunkt der frühen Injektion einen gut geeigneten Parameter dar, mit welchem sich der Beginn der Verbrennung und damit die hauptsächliche Wärmeabgabe kontrollieren läßt. Die Aufteilung der Kraftstoffmenge auf die erste und die zweite Injektion richtet sich nach den jeweiligen Randbedingungen.

Bei einem Dieselmotor mit einer Kolbenmulde an der Oberseite der Kolben ist die frühe Kraftstoffinjektion vorzugsweise in den Quetschraum gerichtet, welcher der Kolbenmulde benachbart ist. Die späte Injektion ist dagegen vorzugsweise in die Kolbenmulde selbst gerichtet. Diese Injektionsverfahren haben sich in Bezug auf die gewünschte Beeinflussung des Beginnes der Verbrennung als vorteilhaft erwiesen.

Die Erfindung betrifft ferner einen Dieselmotor mit mindestens einem Zylinder, der einen darin angeordneten Kolben und mindestens einen Kraftstoffinjektor für eine Direktinjektion von Kraftstoff enthält, sowie mit einer Motorsteuerung, die insbesondere mit dem Kraftstoffinjektor zur Steuerung der Injektionszeitpunkte und -mengen verbunden ist. Die Motorsteuerung ist dahingehend ausgebildet, ein Verfahren der vorstehend erläuterten Art auszuführen. D. h., daß die Motorsteuerung insbesondere die Kraftstoffinjektoren derart ansteuern kann, daß während der Verdichtungsphase mindestens eine Injektion zur Erzeugung einer homogenen Verbrennung erfolgt, wobei bei mittlerer Motorlast zusätzlich eine Kraftstoffinjektion zwischen 0° und 40° nach dem oberen Totpunkt erfolgt. Ferner wird die Abgasrückführungsrate auf Werte zwischen 40% und 75% eingestellt.

Der Kraftstoffinjektor des Dieselmotors enthält vorzugsweise fünf bis zwölf Auslaßöffnungen, welche so ausgebildet sind, daß ein Sprühkegel des Kraftstoffes mit einem Kegelwinkel zwischen ca. 50° und ca. 160° erzeugt werden kann.

Der Dieselmotor ist ferner vorteilhafterweise so ausgelegt, daß dieser ein Kompressionsverhältnis zwischen 12 und 18 erzeugen kann. Das Kompressionsverhältnis ist dabei definiert als das Verhältnis zwischen dem maximalen Volumen (am unteren Totpunkt des Kolbens bzw. beim Schließen der Ventile) und dem minimalen Volumen (am oberen Totpunkt des Kolbens) eines Zylinders.

Des Weiteren weist der Dieselmotor vorzugsweise einen Kolben mit einer an seiner Oberseite ausgebildeten Kolbenmulde auf. Der maximale Durchmesser der Kolbenmulde beträgt dabei vorteilhafterweise ca. 55% bis 75% des Kolbendurchmessers und die maximale Tiefe der Kolbenmulde beträgt ca. 15% bis ca. 25% des Kolbendurchmessers.

Im Folgenden wird die Erfindung mit Hilfe der Figuren beispielhaft näher erläutert.
Es zeigen:
- Fig. 1: einen Schnitt durch einen Zylinder eines erfindungsgemäßen Dieselmotors;
- Fig. 2: ein Diagramm des Zylinderinnendruck und der Wärmeabgabe in Abhängigkeit vom Kurbelwellenwinkel für einen ersten Betriebsmodus bei geringer Last, wobei hier und im Folgenden die Pfeile auf die für die jeweilige Kurve gültige Achse weisen;
- Fig. 3: ein Diagramm der Wärmeabgabe in Abhängigkeit vom Kurbelwellenwinkel bei verschiedenen Abgasrückführungsraten im ersten Betriebsmodus gemäß Figur 2;
- Fig. 4: die Abhängigkeit der Ruß- und NOx-Emissionen von der Abgasrückführungsrate;
- Fig. 5: den Zylinderinnendruck und die Wärmeabgabe in Abhängigkeit vom Kurbelwellenwinkel für einen zweiten Betriebsmodus bei mittleren Lasten;
- Fig. 6: den Zylinderinnendruck und die Wärmeabgabe in Abhängigkeit vom Kurbelwellenwinkel bei geringen Lasten und für einen herkömmlichen Verbrennungsmodus;
- Fig. 7: die Einteilung der verschiedenen Betriebsmodi in Abhängigkeit von der Motordrehzahl und Motorlast.
- Fig. 8: einen Ausschnitt aus dem Zylinderraum bei einer Kolbenstellung von ca. 80° vor dem oberen Totpunkt;
- Fig. 9: eine Darstellung gemäß Figur 8 bei ca. 11 ° vor dem oberen Totpunkt, und
- Fig. 10: den Verlauf der Wärmeabgabe in Bezug auf den Kurbelwellenwinkel bei drei verschiedenen Zeitpunkten der frühen Kraftstoffinjektion der homogenen Verbrennung.

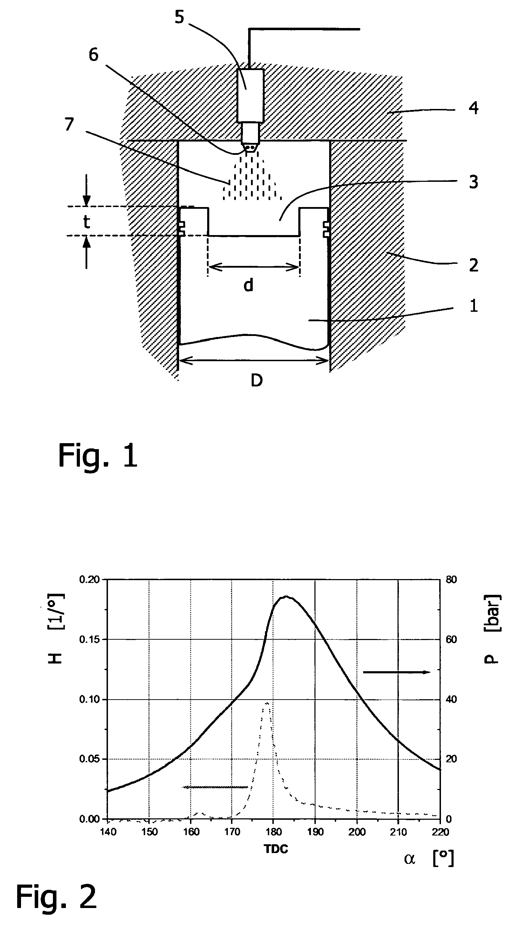

In Figur 1 ist schematisch ein Schnitt durch einen von mehreren Zylindern eines Dieselmotors dargestellt, wobei der Zylinder aus einer Zylinderwand 2 und einem Zylinderkopf 4 besteht und im Zylinder in bekannter Weise ein auf und ab beweglicher Kolben 1 angeordnet ist, der über ein Pleuel (nicht dargestellt) eine Kurbelwelle antreibt.

Im Zylinderkopf 4 ist ferner ein Kraftstoffinjektor 5 angeordnet, der an ein Kraftstoffsystem (nicht dargestellt) angeschlossen ist und Kraftstoff direkt in die Brennkammer injizieren kann. Der Kraftstoffinjektor 5 weist vorzugsweise zwischen fünf und zwölf Auslaßöffnungen 6 auf, aus denen er Kraftstoff abgeben kann. Die Kraftstoffemission erfolgt dabei in einem Sprühkegel 7, dessen Kegelwinkel zwischen 50° und 160° beträgt.

Weiterhin sollen der Kraftstoffinjektor 5 und das Kraftstoffsystem so ausgelegt sein, daß diese in einem Winkelbereich von 180° Kurbelwellenwinkel vor dem oberen Totpunkt bis 180° nach dem oberen Totpunkt zwischen ein und sieben Kraftstoffinjektionen bei einem Kraftstoffdruck zwischen 300 und 2000 bar vornehmen können. Die Flußrate des Kraftstoffinjektors 5 soll zwischen 0.8 und 1.1 mal dem Hubraum des Zylinders pro 30 Sekunden liegen.

Die konstruktive Ausgestaltung des Zylinders ist ferner vorzugsweise so, daß im Zylinder eine Ladungsbewegung stattfinden kann, wobei das Drallniveau vorzugsweise zwischen 0.5 und 2 und das Tumble-Niveau zwischen 0 und 2 liegt. Das im Zylinder einstellbare Kompressionsverhältnis liegt vorzugsweise zwischen 12 und 18.

Des Weiteren ist in Figur 1 erkennbar, daß der Kolben 1 an seiner Oberseite eine - schematisch mit rechteckigem Querschnitt dargestellte - Ko Ibenmulde 3 aufweist. Für den maximalen Durchmesser d und die maximale Tiefe t der Kolbenmulde 3 gelten dabei in Bezug auf den Kolbendurchmesser D die folgenden Größenbereiche : d = 0.55*D bis 0.75*D, t = 0.15*D bis 0.25*D.

Nachfolgend soll mit Hilfe der übrigen Figuren ein Verfahren zum Betrieb eines Dieselmotors der in Figur 1 dargestellten Art beschrieben werden, welches durch eine entsprechende Steuerung der Kraftstoffinjektionen und der Ladungsbewegung die Kombination verschiedener Verbrennungsmodi erlaubt. Insbesondere kann dabei die Bildung des Luft-Kraftstoff-Gemisches entweder in der Kolbenmulde 3 stattfinden, während sich der Kolben 3 am oberen Totpunkt befindet, oder bei fern vom oberen Totpunkt gelegenen Kolbenpositionen im Verdichtungs- und Arbeitshub. Durch die unterschiedlichen Arten der Gemischbildung und der Verbrennung können die folgenden Betriebsmodi des Dieselmotors unterschieden werden:

### A: Homogene Verbrennung

In dem ersten Betriebsmodus A finden ein bis vier Kraftstoffinjektionen während des Verdichtungstaktes in einem großen Zeitfenster zwischen dem unteren Totpunkt und dem oberen Totpunkt des Kolbens statt. Der Injektionsdruck des Kraftstoffes liegt dabei zwischen 300 und 2000 bar. Die gesamte Luft-Kraftstoff-Mischung wird vor dem Beginn der Verbrennung gebildet, und der Homogenitätsgrad ist hoch. Der Anstieg des Zylinderinnendruckes sowie der maximale Zylinderdruck können selbst bei geringen Motorlasten sehr groß sein und an die mechanischen Grenzen des Motors stoßen, was die allgemeine Anwendung der homogenen, frühen Verbrennung bei höheren Motorlasten in der Regel verhindert.

In Figur 2 ist in diesem Zusammenhang der Verlauf des Zylinderinnendruckes P (durchgezogene Kurve) und der Wärmeabgabe H (gestrichelte Kurve) über dem Kurbelwellenwinkel dargestellt, wobei 180° dem oberen Totpunkt TDC entspricht. Aus der Figur ist erkennbar, daß die hauptsächliche Wärmeabgabe nahe beim oberen Totpunkt TDC (180°) stattfindet und durch eine schnelle Verbrennungsrate charakterisiert ist, was für diese Verbrennung zu einem erheblichen Gradienten des Zylinderdruckes P führt. Ein anderes typisches Merkmal dieses Verbrennungsmodus ist die kleine vorgezogene Wärmeabgabe, die typischerweise 5° bis 20° Kurbelwellenwinkel vor der hauptsächlichen Wärmeabgabe auftritt. Dieses für einen homogenen Betrieb typische Phänomen wird durch die Kinetik der Kraftstoffverbrennung bei niedrigen Temperaturen verursacht und häufig als "Cool flame"-Verbrennung bezeichnet.

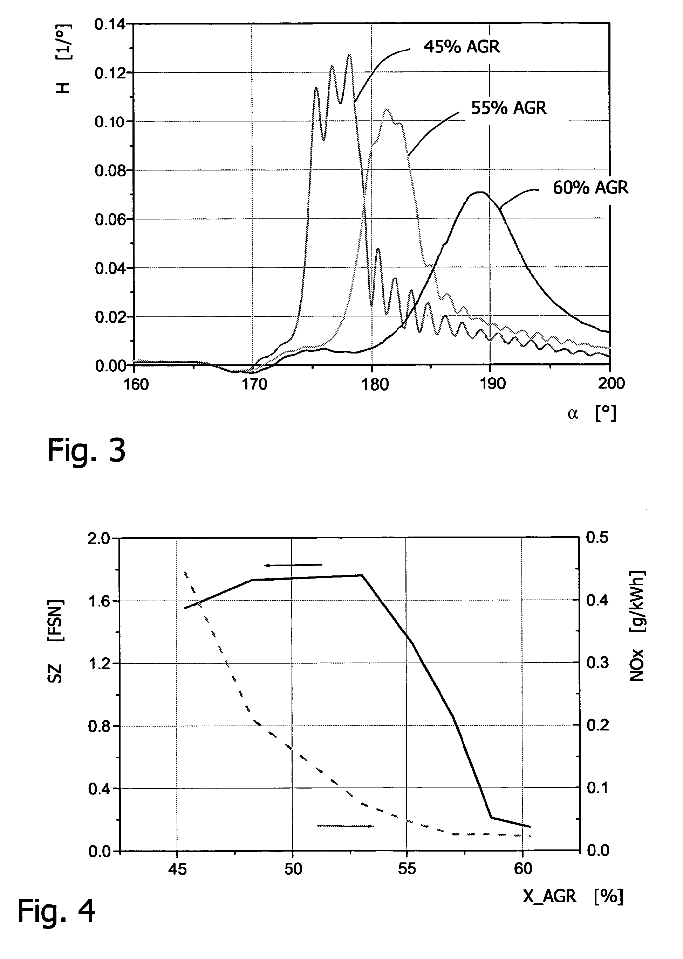

Wichtig für den ersten Betriebsmodus A sind hohe Abgasrückführungsraten, die typischerweise zwischen 40% und 75% liegen. Die Auswirkungen auf die Schadstoffemissionen und die Geräuschentwicklung sind dabei substanziell verschieden von der Auswirkung der Abgasrückführung bei herkömmlicher Verbrennung (d. h. bei einer heterogenen Verbrennung mit Injektionen um den oberen Totpunkt). Figur 3 zeigt in diesem Zusammenhang drei verschieden Verläufe der Wärmeabgabe H bei einer homogenen Verbrennung unter Teillast gemäß dem ersten Betriebsmodus A für drei verschiedene Abgasrückführungsraten AGR von 45%, 55% und 60%. Dabei wird erkennbar, daß eine Erhöhung der Abgasrückführungsrate um 15% eine Verzögerung der primären Wärmeabgabe um mehr als 10° Kurbelwellenwinkel verursacht. Hierdurch wird gleichzeitig eine signifikante Reduzierung der Ruß- und NOx-Emissionen erzielt. Letztere wird aus Figur 4 unmittelbar erkennbar, welche die genannten Emissionsraten in Abhängigkeit von der Abgasrückführungsrate X_AGR darstellt.

### B: Teilweise homogene Verbrennung

In einem zweiten Betriebsmodus B wird ein Teil des Kraftstoffes in einer ersten Phase unter den gleichen Randbedingungen (Kraftstoffdruck, AGR etc.) wie bei dem Betriebsmodus A homogen verbrannt. Die hauptsächliche Wärmeabgabe dieser Verbrennungsphase tritt dann in einem engen Fenster zwischen ±15° um den oberen Totpunkt auf. Am Ende dieser ersten Phase oder während dieser Phase findet sodann eine weitere Kraftstoffinjektion statt. Das Mengenverhältnis zwischen der in der ersten Phase und der in der zweiten Phase injizierten Kraftstoffmenge hängt von der Drehzahl und Belastung des Motors ab und liegt typischerweise zwischen 50:50 und 90:10.

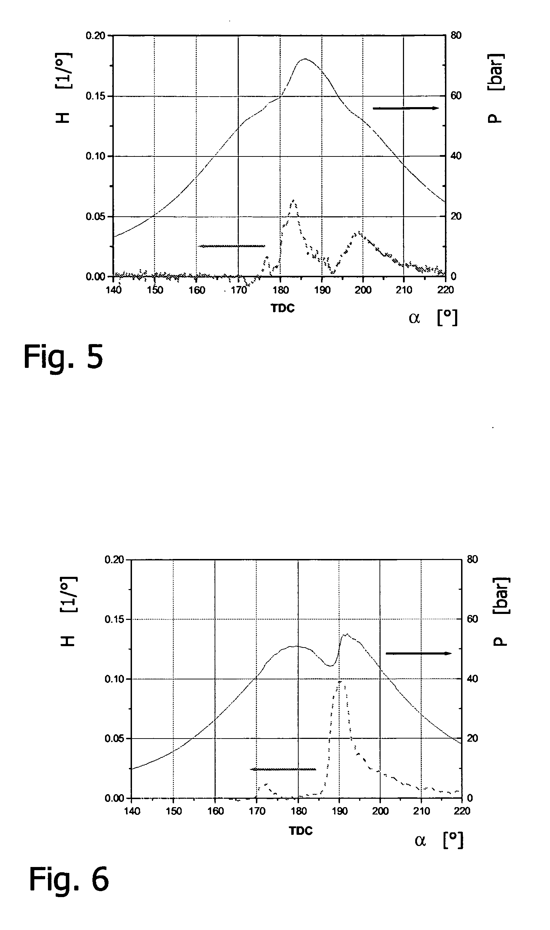

Figur 5 zeigt diesbezüglich einen typischen Verlauf der Wärmeabgabe H und des Zylinderinnendruckes P für den zweiten Betriebsmodus B der partiell homogenen Verbrennung. Hieraus wird ersichtlich, daß die Zündverzögerung für die erste Injektion ungewöhnlich groß ist. Eine derartige lange Zündverzögerung wird durch eine Reihe von Maßnahmen, insbesondere ein reduziertes Kompressionsverhältnis, eine aufgrund eines teilweise gekühlten rückgeführten Abgases richtige Einlaßtemperatur, sowie durch hohe AGR-Raten (40-60%) erreicht, die zu einer erhöhten spezifischen Wärmekapazität führen. Diese Maßnahmen vermindern die Durchschnittstemperatur bei der abschließenden Kompression und erhöhen daher die Zündverzögerung. Des Weiteren hat ein Verbrennungssystem mit einer wandgeführten Strömung, welche das gasförmige Luft-Kraftstoff-Gemisch für eine gewisse Zeit unter der Zündtemperatur von etwa 900 K hält, Einfluß auf die Zündverzögerung.

Vor der eigentlichen Zündung finden Reaktionen bei niedrigen Temperaturen ("Cool Flame") und die damit verbundene Wärmeabgabe statt, ebenso wie weitere Mischprozesse zur Erzeugung einer homogeneren Mischung, welche niedrigere Verbrennungstemperaturen und damit geringere NOx-Emissionen bewirken. Die Wärmeabgabe der Reaktionen bei niedrigen Temperaturen kann in Figur 5 deutlich gesehen werden und stellt eine indirekte Anzeige für räumlich niedrige Temperaturen und eine gute Mischung innerhalb der Verbrennungsmulde dar.

Während oder nach der Verbrennung beziehungsweise der hauptsächlichen Wärmeabgabe findet eine zweite Injektion nach dem oberen Totpunkt statt. Der dabei zusätzlich injizierte Kraftstoff profitiert teilweise von der Luftbewegung im Zylinder, die durch die erste Injektion verursacht wurde und die frische Zylinderladung zum Injektionsort transportiert. Die Verbrennungstemperaturen sind aufgrund der später auftretenden Wärmeabgabe allgemein reduziert.

Die Prozeßparameter und Ausgestaltungen der Kolbenmulde und des Kraftstoffinjektors werden so gewählt, daß ein Teil der Bildung des homogenen Gemisches um den oberen Totpunkt herum stattfindet, und daß die hauptsächliche Wärmeabgabe nach dem oberen Totpunkt eintritt. Durch diese Strategie kann der Betriebsbereich mit geringen NOx- und Rußemissionen erheblich ausgedehnt und ein hohes Optimierungspotential in Bezug auf die Verbrennungsgeräusche und die Reduzierung des maximalen Zylinderdruckes erschlossen werden. Ferner ist ein glatter Übergang von einer homogenen zu einer überwiegend durch eine Flammendiffusion angetriebenen Verbrennung möglich.

### C/D: Vorvermischung und Flammendiffusion

Das erfindungsgemäße Verfahren ermöglicht des Weiteren einen dritten Betriebsmodus C/D mit einer herkömmlichen Dieselverbrennung mit Direktinjektion innerhalb des ganzen Betriebsbereiches einschließlich der Volllastkurve. Für eine hohe Teillast weist das Verbrennungssystem geeignete geometrische Eigenschaften auf, um eine optimale Kalibrierung für Strategien mit einer geteilten Hauptinjektion zu ermöglichen. Weiterhin behält der Motor in Abhängigkeit von den atmosphärischen Bedingungen sowie den Motorbetriebstemperaturen (Wasser und Öl) die Fähigkeit, auch bei niedriger Teillast im herkömmlichen Verbrennungsmodus betrieben zu werden.

Figur 6 zeigt in diesem Zusammenhang einen typischen Verlauf der Wärmeabgabe H und des Zylinderinnendruckes P für einen herkömmlichen Betrieb bei geringer Teillast. Im Vergleich zum homogenen Modus A wird die Wärme sehr viel später freigesetzt, im dargestellten Beispiel ca. 20° Kurbelwellenwinkel relativ zum homogenen Betrieb bei vergleichbarer Last.

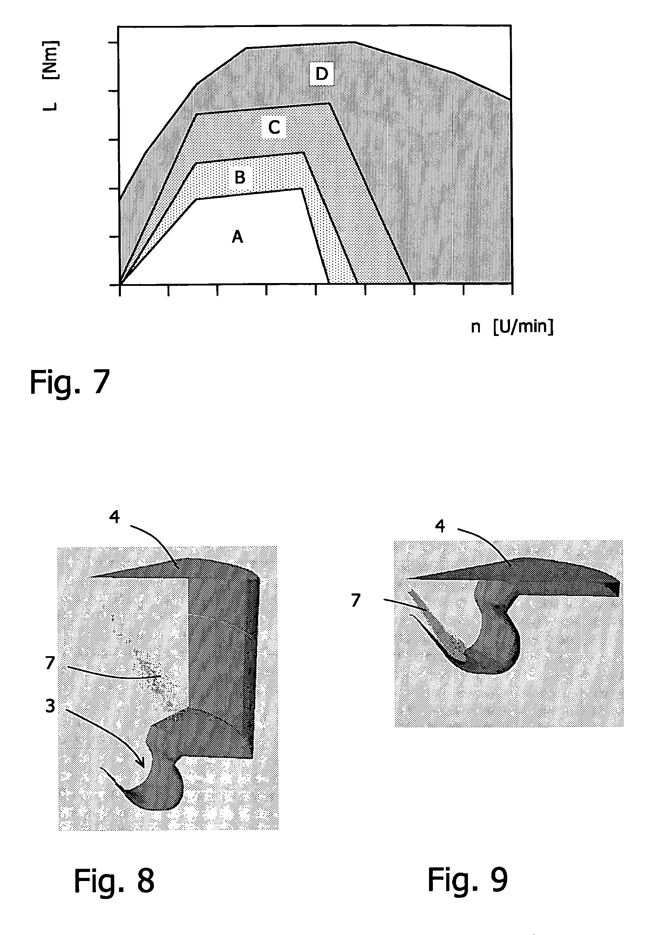

Figur 7 zeigt eine beispielhafte Einteilung des durch die Motorlast L und die Motordrehzahl n beschriebenen Motorzustandsraumes auf die vorstehend beschriebenen verschiedenen Betriebsmodi, wobei der genaue Verlauf der Übergangszonen zwischen den Betriebsmodi je nach Motor und Anwendungsfall individuell festgelegt werden kann.

Die in Verbindung mit den Betriebsmodi A und vor allem B erläuterte, vergleichsweise hohe Zündverzögerung bei der homogenen Verbrennung resultiert aus der sehr frühen Kraftstoffinjektion in Kombination mit äußerst hohen Raten an rezirkuliertem Abgas (40-75%). Eine ausgeprägte Zündverzögerung führt grundsätzlich zu dem Problem, daß der Zündzeitpunkt beziehungsweise der Beginn der Verbrennung in einem verhältnismäßig breiten Bereich variiert. Um demgegenüber eine stabile und reproduzierbare Regelung des Verbrennungsbeginns und damit des Zeitpunkts der hauptsächlichen Wärmeabgabe zu erreichen, wird vorzugsweise eine spezielle Kraftstoffinjektionsstrategie eingesetzt. Diese Strategie beinhaltet mindestens zwei Kraftstoffinjektionen mit einer speziellen, von der Form der Kolbenmulde 3, von der Ladungsbewegung und von der Motorlast abhängigen Zeitsteuerung. Die Figuren 8 und 9 veranschaulichen diesbezüglich für eine spezielle Ausgestaltung der Brennkammer, wie eine derartige Strategie konkret aussehen kann.

Figur 8 zeigt einen sektorförmigen Ausschnitt aus der Brennkammer bei einer Stellung des Kolbens von ca. 82° vor dem oberen Totpunkt. In der Figur sind ebenfalls die Kraftstofftröpfchen 7 einer ersten, frühen Kraftstoffinjektion angedeutet. Die erste Kraftstoffinjektion findet somit zwischen ca. 120° und ca. 60° vor dem oberen Totpunkt statt. Vorzugsweise wird der Kraftstoff nicht in die Kolbenmulde 3, sondern in den angrenzenden Bereich, in dem eine Quetschströmungsbildung stattfindet, injiziert.

Figur 9 zeigt in einer Darstellung entsprechend Figur 8 die zweite Kraftstoffinjektion. Der Kolben befindet sich zu diesem Zeitpunkt bei ca. 12° vor dem oberen Totpunkt. Die zweite Kraftstoffinjektion 7 erfolgt zwischen ca. 25° und 0° vor dem oberen Totpunkt und ist vorzugsweise in die Kolbenmulde 3 gerichtet.

Die beschriebene Strategie der Kraftstoffinjektion garantiert ein räumlich gut durchmischtes Luft-Kraftstoff-Gemisch, welches zu niedrigen NOx- und Rußemissionen führt. Die Aufteilung der Kraftstoffmasse auf die einzelnen Kraftstoffinjektionen muß entsprechend der Motordrehzahl und den Lastbedingungen vorgenommen werden. Für das obige Beispiel der Figuren 8 und 9 werden etwa 35% des Kraftstoffes in der ersten und 65% in der zweiten Kraftstoffinjektion zugeführt.

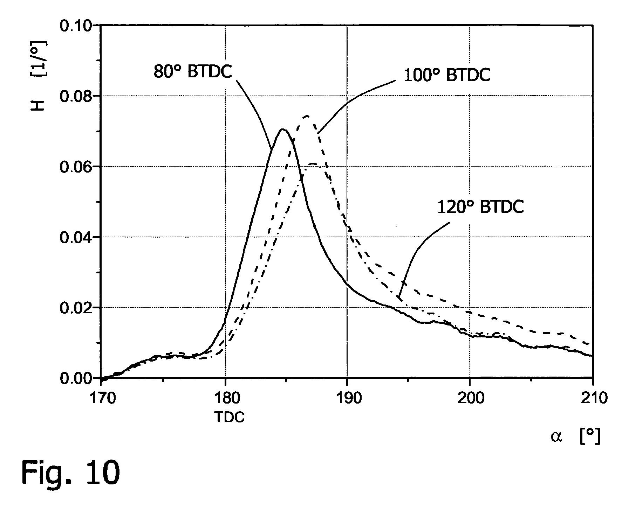

Der Vorteil der (mindestens) zweiphasigen Kraftstoffinjektion liegt in der Möglichkeit, durch den Zeitpunkt der ersten Injektion im oben genannten Zeitfenster den Beginn der Verbrennung zu beeinflussen. Figur 10 zeigt diesbezüglich die Verläufe der Wärmeabgabe in Abhängigkeit vom Kurbelwellenwinkel für drei verschiedene Zeitpunkte der ersten Kraftstoffinjektion. Überraschenderweise wird die Hauptmenge an Wärme um so später freigesetzt, je früher die erste Kraftstoffinjektion stattfindet. Vorzugsweise werden daher solche frühen Kraftstoffinjektionen vorgenommen. Obgleich die Ladungsverteilung im Zylinder extrem homogen ist, ist es mit der beschriebenen Kraftstoffinjektionsstrategie möglich, den Beginn der Verbrennung zu beeinflussen und auf diese Weise einen geeigneten Regelungsparameter für die Verbrennungsgeräusche und die Emissionen zu erhalten.

## Patentansprüche

1. Verfahren zum Betrieb eines Dieselmotors mit Direkteinspritzung, umfassend die folgenden Betriebsmodi:
A) Erster Betriebsmodus A bei geringer Motorlast (L): homogene Verbrennung des injizierten Kraftstoffes **durch** mindestens eine Kraftstoffinjektion während der Verdichtungsphase zwischen 180° und 0° vor dem oberen Totpunkt und **durch** Abgasrückführung mit einer Rate zwischen 40% und 70%;
B) Zweiter Betriebsmodus B bei mittlerer Motorlast (L): homogene Verbrennung von ca. 50% bis ca. 90% des injizierten Kraftstoffes, indem mindestens eine Kraftstoffinjektion während der Verdichtungsphase zwischen 180° und 0° vor dem oberen Totpunkt und eine Abgasrückführung mit einer Rate zwischen 40% und 70% erfolgt, sowie Injektion des restlichen Kraftstoffes zwischen 0° und 40° nach dem oberen Totpunkt, wobei die Zündverzögerung der homogenen Verbrennung so groß eingestellt wird, daß die Bildung des homogenen Gemisches zumindest teilweise in der Nähe des oberen Totpunktes und die maximale Wärmeabgabe nach dem oberen Totpunkt stattfindet;
wobei die Kraftstoffmenge für die homogene Verbrennung zweiphasig in einer frühen Kraftstoffinjektion zwischen ca. 120° bis ca. 60° vor dem oberen Totpunkt und in einer späten Kraftstoffinjektion zwischen ca. 25° und ca. 0° vor dem oberen Totpunkt injiziert wird.

2. Verfahren nach Anspruch 1,
**dadurch gekennzeichnet, daß**
die Kraftstoffinjektion während der Verdichtungsphase in den beiden Betriebsmodi A und B bei einem Kraftstoffdruck von 300 bis 2000 bar erfolgt.

3. Verfahren nach Anspruch 1 oder 2,
**dadurch gekennzeichnet, daß**
die Einstellung der Zündverzögerung durch ein reduziertes Verdichtungsverhältniserzeugt wird.

4. Verfahren nach mindestens einem der Ansprüche 1 bis 3,
**dadurch gekennzeichnet, daß**
die Einstellung der Zündverzögerung durch eine Kühlung der rückgeführten Abgase erzeugt wird.

5. Verfahren nach mindestens einem der Ansprüche 1 bis 4,
**dadurch gekennzeichnet, daß**
die Einstellung der Zündverzögerung durch eine wandgeführte Strömung und/oder durch die Formgebung einer Kolbenmulde (3) erzeugt wird.

6. Verfahren nach mindestens einem der Ansprüche 1 bis 5,
**dadurch gekennzeichnet, daß**
dieses einen dritten Betriebsmodus umfaßt, der vorzugsweise bei hoher Last und/oder bei Volllast ausgeführt wird, und der eine heterogene Verbrennung mit mindestens einer Kraftstoffinjektion in der Nähe des oberen Totpunktes umfaßt.

7. Verfahren nach mindestens einem der Ansprüche 1 bis 6,
**dadurch gekennzeichnet, daß**
die frühe Kraftstoffinjektion in den oberhalb einer Kolbenmulde (3) befindlichen Quetschraum gerichtet ist.

8. Verfahren nach mindestens einem der Ansprüche 1 bis 7,
**dadurch gekennzeichnet, daß**
die späte Kraftstoffinjektion in die Kolbenmulde (3) gerichtet ist.

9. Dieselmotor mit mindestens einem Zylinder (2, 4), der einen Kolben (1) und mindestens einen Kraftstoffinjektor (5) enthält, sowie mit einer Abgasrückführung und einer Motorsteuerung,
**dadurch gekennzeichnet, daß**
die Motorsteuerung dahingehend ausgebildet ist, ein Verfahren nach mindestens einem der Ansprüche 1 bis 8 auszuführen.

10. Dieselmotor nach Anspruch 9,
**dadurch gekennzeichnet, daß**
der Kraftstoffinjektor (5) fünf bis zwölf Auslaßöffnungen (6) aufweist und einen Sprühkegel (7) mit einem Öffnungswinkel von ca. 50° bis ca. 160° erzeugen kann.

11. Dieselmotor nach Anspruch 9 oder 10,
**dadurch gekennzeichnet, daß**
dieser ein Kompressionsverhältnis zwischen 12 und 18 besitzt.

12. Dieselmotor nach mindestens einem der Ansprüche 9 bis 11,
**dadurch gekennzeichnet, daß**
der Kolben (1) eine Kolbenmulde (3) aufweist, deren maximaler Durchmesser (d) ca. 55% bis ca. 75% des Kolbendurchmessers (D) beträgt.

13. Dieselmotor nach mindestens einem der Ansprüche 9 bis 12,
**dadurch gekennzeichnet, daß**
der Kolben (1) eine Kolbenmulde (3) aufweist, deren maximale Tiefe (t) ca. 15% bis ca. 25% des Kolbendurchmessers (D) beträgt.

## Claims

1. Method for operating a diesel engine with direct injection, comprising the following operating modes:
A) first operating mode A at low engine load (L): homogeneous combustion of the injected fuel by at least one fuel injection during the compression phase between 180° and 0° before top dead center and by exhaust gas recirculation with a rate of between 40% and 70%;
B) second operating mode B at medium engine load (L): homogeneous combustion of approx. 50% to approx. 90% of the injected fuel, by means of at least one fuel injection taking place during the compression phase between 180° and 0° before top dead center and exhaust gas recirculation with a rate of between 40% and 70%, and injection of the remaining fuel between 0° and 40° after top dead center, the ignition delay of the homogeneous combustion being set to be sufficient for the formation of the homogeneous mix to take place at least partially in the vicinity of top dead center and for the maximum release of heat to take place after top dead center;
wherein the quantity of fuel for the homogeneous combustion is injected in two phases, an early fuel injection, between approx. 120° and approx. 60° before top dead center, and a late fuel injection, between approx. 25° and approx. 0° before top dead center.

2. Method according to Claim 1,
**characterized in that**
the fuel injection during the compression phase in both operating modes A and B takes place at a fuel pressure of from 300 to 2000 bar.

3. Method according to Claim 1 or 2,
**characterized in that**
the ignition delay is set by means of a reduced compression ratio.

4. Method according to at least one of Claims 1 to 3,
**characterized in that**
the ignition delay is set by cooling of the recirculated exhaust gases.

5. Method according to at least one of Claims 1 to 4,
**characterized in that**
the ignition delay is set by wall-guided flow and/or by the shape of a piston recess (3).

6. Method according to at least one of Claims 1 to 5,
**characterized in that**
the method comprises a third operating mode, which is preferably carried out at high load and/or at full load, and which comprises heterogeneous combustion with at least one fuel injection in the vicinity of top dead center.

7. Method according to at least one of Claims 1 to 6,
**characterized in that**
the early fuel injection is directed into the quench space located above a piston recess (3).

8. Method according to at least one of Claims 1 to 7,
**characterized in that**
the late fuel injection is directed into the piston recess (3).

9. Diesel engine having at least one cylinder (2, 4), which includes a piston (1) and at least one fuel injector (5), and having exhaust gas recirculation and an engine control unit,
**characterized in that**
the engine control unit is designed to carry out the method according to at least one of claims 1 to 8.

10. Diesel engine according to Claim 9,
**characterized in that**
the fuel injector (5) has from five to twelve outlet openings (6) and can produce a spray cone (7) with a cone angle of approx. 50° to approx. 160°.

11. Diesel engine according to Claim 9 or 10,
**characterized in that**
the diesel engine has a compression ratio of between 12 and 18.

12. Diesel engine according to at least one of Claims 9 to 11,
**characterized in that**
the piston (1) has a piston recess (3), the maximum diameter (d) of which is approx. 55% to approx. 75% of the piston diameter (D).

13. Diesel engine according to at least one of Claims 9 to 12,
**characterized in that**
the piston (1) has a piston recess (3), the maximum depth (t) of which is approx. 15% to approx. 25% of the piston diameter (D).

## Revendications

1. Procédé pour faire fonctionner un moteur diesel à injection directe, comprenant les modes de fonctionnement suivants :
A) Premier mode de fonctionnement A pour une faible charge du moteur (L) : combustion homogène du carburant injecté par au moins une injection de carburant pendant le temps de compression entre 180° et 0° avant le point mort haut et par recirculation des gaz d'échappement à un taux compris entre 40% et 70% ;
B) Deuxième mode de fonctionnement B pour une charge moyenne du moteur (L) : combustion homogène d'environ 50% à 90% du carburant injecté, au moins une injection de carburant ayant lieu pendant le temps de compression entre 180°et 0° avant le point mort haut et une recirculation des gaz d'échappement ayant lieu à un taux compris entre 40% et 70%, ainsi qu'injection du carburant restant entre 0° et 40° après le point mort haut, le retard à l'allumage de la combustion homogène étant ajusté si grand que la formation du mélange homogène a lieu au moins en partie à proximité du point mort haut et que la diffusion de chaleur maximale a lieu après le point mort haut ;
la quantité de carburant pour la combustion homogène étant injectée en deux phases au cours d'une injection préalable de carburant entre environ 120° à environ 60° avant le point mort haut et au cours d'une injection ultérieure entre environ 25° et environ 0° avant le point mort haut.

2. Procédé selon la revendication 1,
**caractérisé en ce que**
l'injection de carburant a lieu pendant le temps de compression dans les deux modes de fonctionnement A et B pour une pression de carburant de 300 à 2000 bars.

3. Procédé selon la revendication 1 ou 2,
**caractérisé en ce que**
l'ajustement du retard à l'allumage est produit par un rapport de compression réduit.

4. Procédé selon au moins l'une quelconque des revendications 1 à 3,
**caractérisé en ce que**
l'ajustement du retard à l'allumage est produit par un refroidissement des gaz d'échappement recirculés.

5. Procédé selon au moins l'une quelconque des revendications 1 à 4,
**caractérisé en ce que**
l'ajustement du retard à l'allumage est produit par un écoulement guidé par les parois et/ou par la formation d'une cavité de piston (3).

6. Procédé selon au moins l'une quelconque des revendications 1 à 5,
**caractérisé en ce**
**qu'**il comprend un troisième mode de fonctionnement qui est mis en oeuvre de préférence pour une charge élevée et/ou pour une charge maximale, et qui comprend une combustion hétérogène avec au moins une injection de carburant à proximité du point mort haut.

7. Procédé selon au moins l'une quelconque des revendications 1 à 6,
**caractérisé en ce que**
l'injection préalable de carburant est orientée dans l'espace de compression situé au-dessus d'une cavité du piston (3).

8. Procédé selon au moins l'une quelconque des revendications 1 à 7,
**caractérisé en ce que**
l'injection de carburant ultérieure est orientée dans la cavité du piston (3).

9. Moteur diesel comprenant au moins un cylindre (2, 4) qui contient un piston (1) et au moins un injecteur de carburant (5), ainsi qu'une recirculation de gaz d'échappement et une commande de moteur,
**caractérisé en ce que**
la commande du moteur est réalisée de manière à mettre en oeuvre un procédé selon au moins l'une quelconque des revendications 1 à 8.

10. Moteur diesel selon la revendication 9,
**caractérisé en ce que**
l'injecteur de carburant (5) présente cinq à douze ouvertures de sortie (6) et peut produire un cône de pulvérisation (7) avec un angle d'ouverture d'environ 50° à environ 160°.

11. Moteur diesel selon la revendication 9 ou 10,
**caractérisé en ce**
**qu'**il possède un rapport de compression compris entre 12 et 18.

12. Moteur diesel selon au moins l'une quelconque des revendications 9 à 11,
**caractérisé en ce que**
le piston (1) présente une cavité de piston (3) dont le diamètre maximal (d) vaut environ 55% à environ 75% du diamètre du piston (D).

13. Moteur diesel selon au moins l'une quelconque des revendications 9 à 12,
**caractérisé en ce que**
le piston (1) présente une cavité de piston (3) dont la profondeur maximale (t) vaut environ 15% à environ 25% du diamètre du piston (D).
